Europäisches Patentamt

European Patent Office

Office européen des brevets

(19)

(11) Publication number: **0 083 468**
A1

(12) **EUROPEAN PATENT APPLICATION**

(21) Application number: **82300029.4**

(22) Date of filing: **05.01.82**

(51) Int. Cl.³: **B 65 G 47/26,** B 65 G 35/06,
F 16 H 13/00, F 16 H 27/08

(43) Date of publication of application: **13.07.83**
**Bulletin 83/28**

(71) Applicant: **Folkes, Alan Robert, 154 Stock Road,**
**Billericay Essex (GB)**

(72) Inventor: **Folkes, Alan Robert, 154 Stock Road, Billericay**
**Essex (GB)**

(84) Designated Contracting States: **AT BE CH DE FR IT LI**
**NL SE**

(74) Representative: **Luckhurst, Anthony Henry William et al,**
**STANLEY, POPPLEWELL, POOLE 57 Lincoln's Inn**
**Fields, London WC2A 3LS (GB)**

(54) **Accumulation conveyor.**

㉗ An accumulation conveyor has the drive from a longitudinal drive shaft (3) passed to a conveyor element (2) by means of a driving wheel (4), preferably a bevel gear (4a), engaging a contact surface, preferably an annular gear (5a) of a driven wheel (5b) in driving contact with the conveyor element (2). The contact surface is provided with one or more gaps (6, 6a) which enable the drive transmission to be regularly interrupted and restored, so that on accumulation, the transmission only needs to slip until the gap (6, 6a) reaches the wheel (4, 4a) when the driven wheel (5, 5b) will stop.

ACTORUM AG

This invention relates to accumulation conveyors used for transporting articles and packages, e.g. in factories. Such conveyors are often driven roller conveyors which consist of a basic framework extending along the required transport route and carrying transverse rollers over which the articles are passed In a driven roller conveyor, the rollers are powered, usually from a main power unit located at one end of the conveyor.

Many different methods have been used to drive the rollers and the most common system systems use a recirculating longitudinal belt or chain drive arranged to turn at least some of the rollers. The number of rollers which are driven is usually varied depending on the power required.

One big problem with driven roller conveyors concerns the interruption of the drive when articles on the conveyor begin to accumulate, e.g. if there is a blockage or if too many are being supplied to a particular handling area.

One system which has achieved considerable success uses a longitudinal drive shaft extending along one side of the conveyor. On this shaft are mounted spindles which are relatively loose friction fit on the shaft. These spindles are connected to rollers which are to be driven by endless belts under tension, each belt passing through a half-turn before passing over the end of the roller, so that the drive is transmitted in a
direction perpendicular to that of the shaft. Such a
system is commercially available under the Trade Name
"Poweroll". In such a system, an accumulation of goods
on the conveyor prevents the rollers from turning and
the small increased load on the spindles causes them
to slip on the drive shaft. The drive to the rollers
is thus governed by torque - a slight increase in torque
leading to interruption of the drive.

This system relies on slippage of the spindles,
which inevitably leads to wear and noise, and the wear
in turn leads to inefficient transmission of power to
the rollers.

The present invention is also applicable to
other types of conveyors, such as overhead conveyors
in which carriers are in rolling contact with upper
surfaces of the drive wheels and suspended from them.

I have now devised a simple transmission system
which enables the power to be disengaged from from
conveying elements on which an article has become
stationary because of accumulation on the conveyor,
which system does not depend on slippage under
increased torque. This transmission system isolates the
roller from the drive shaft almost instantaneously
and as no slippage is involved the system is comparatively
silent and free from wear.

According to the present invention there is
provided an accumulation conveyor comprising a series of conveying elements at least some of which are driven
by a longitudinal drive shaft, characterised in that
drive is transmitted to a conveyor element by a
transmission system comprising a driving wheel rotatable
with the drive shaft and one or more driven wheels
rotatable about transverse axes and drivingly connected
with the conveying elements arranged and constructed so
that the drive supplied to the conveying element is regularly
interrupted and is restored by movement of the conveying
element.

In general, the regular interruption is achieved
by interrupting a contact surface on a driven wheel at
one point or at two or more points spaced radially
from each other so that when the interrupted portion
faces the contacting wheel, contact is, at that point,
broken.

In one preferred embodiment, the driving wheel
rotatable with the drive shaft is arranged so that its
driving surface can contact a face of a drive wheel
mounted with its axis perpendicular to that of the
drive shaft, the drive wheel being provided with a
recess in the area contacted by the primary drive
wheel, whereby driving contact with the primary drive
wheel is interrupted at the point when the intermediate
drive wheel is rotated so that the recess faces the
drive wheel.

The above-mentioned embodiments generally
relate to transmissions in which the drive is by friction,

0083468

the wheels rotating against one another under a
certain pressure which is either provided by the
natural resilience of the material, or is alternatively
supplied by the spring bias on the wheel mounting. In
either situation the bias must be such that when the
recess or flat on a driven wheel faces the contacting
driving wheel, contact is indeed broken. Obviously too
much resilience would mean that the driving wheel
might contact the recessed part of the surface and so
still transmit power.

In an alternative preferred system, the wheels
may be toothed, e.g. in the manner of a bevel gear. In
this case, the interruption can constitute one or more
shorter teeth, or even a local absence of teeth.

The drive interruption is achieved as follows.
Under normal running circumstances of a driven roller
conveyor, with no accumulation of goods on the conveyor,
the momentum of an article on the conveyor and also
the drive supplied to it by rollers at the rear,
ensures that a driven roller at the front of the article
is rotated into re-engagement of the driving wheels.
Thus, as soon as drive is disengaged by the recess
rotating to face the driving wheel, the recessed or
flatted wheel is urged passed this position by the
article and drive is reconnected. As soon as there is
an accumulation of goods on the conveyor, a package will
stop and there will then be no momentum acting on the
rollers to reconnect the drive once it has been interrupted. Thus, as soon as the passage of an article along the conveyor is impeded, the power supplied to the rollers on which it stands is interrupted.

A similar chain of events applies, mutatis mutandis, to an overhead conveyor.

Once the accumulation on the conveyor has been cleared, drive can be reconnected simply by giving the stationary carries a package a slight push sufficient to turn the rollers and re-engage the driven wheels. This push may be manual or may be supplied by following carriers or packages.

Alternatively, a manually operated device may be provided to give an impulse to a driven wheel.

Preferred embodiments of the invention will now be described with reference to the accompanying diagrammatic drawings, in which :-

Figure 1 represents a partial plan view of a drum roller conveyor seen from below;

Figure 2 represents a partial side view along the line A-A;

Figure 3 represents an oblique view of the driven wheel;

Figure 4 is a view similar to Figure 2 showing an alternative arrangement,

Figure 5 is a longitudinal section of part of an overhead conveyor in accordance with a preferred form of the present invention;

Figure 6 is a section on the line VI-VI of Figure 1; and

Figure 7 is a plan view with carriers omitted.

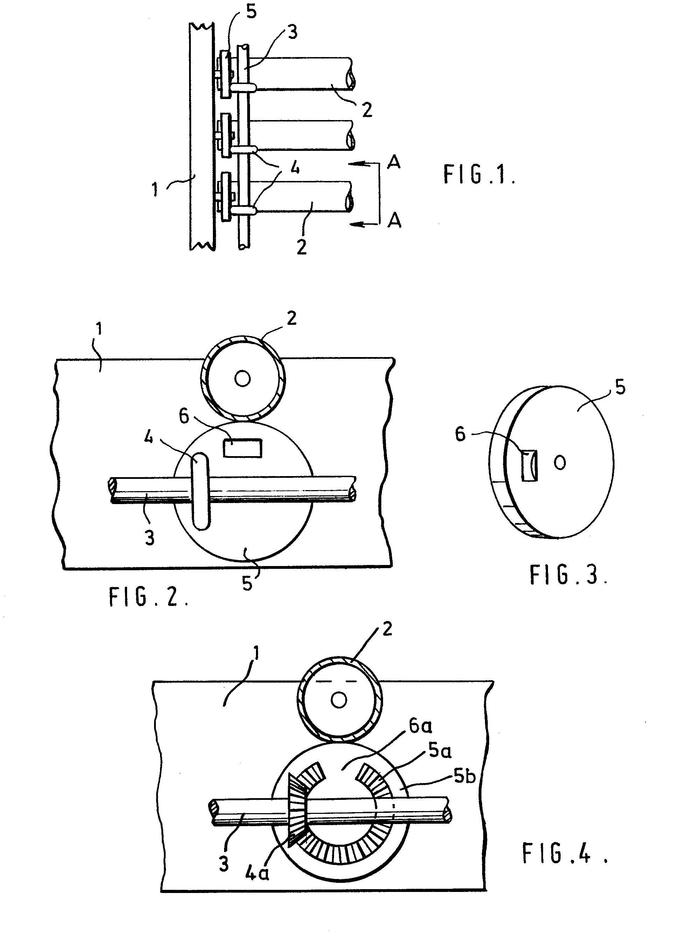

In the arrangement shown in figures 1 to 3, the conveyor comprises a longitudinal frame 1 carrying a plurality of conveying element in the form of transverse rollers 2 and a longitudinally extending drive shaft 3. Under the rollers intended to be driven, there are located on the drive shaft 3, driving wheels 4. The driving wheels 4 are arranged to be rotated solidly with the drive shaft 3 and to transmit their rotation to driven wheels 5 which in turn contact the rollers 2 and turn them.

Referring specifically to Figure 3, each driven wheel 5 is provided on one face with a recess 6 such that the driving wheel 4 will rotate the driven wheel 5 until the recess 6 faces it, whereupon contact between the driving wheel 4 and the driven wheel 5 is lost, but is regained on slight rotation of the roller 2.

Conveniently, the drive wheels 4 are formed from a resilient material such as synthetic rubber and the driven wheels 5 are formed from a suitably hardwearing rigid material, e.g. a plastics material such as nylon

In operation the drive shaft 3 rotates about its axis, thus causing the drive wheels 4 to contact the driven wheels 5 and rotate them. At each point where the drive wheel 4 comes to face the recess 6 in the driven wheel 5, contact is interrupted, but further

- 7 -

rotation of the driven wheel 5, by virtue of inertia in the motion of a package over the rollers 2, moves the recess 6 passed the drive wheel 4 so that contact is restored. If the roller 2 is in contact with and restrained by a stationary item then the drive will slip until interruption of the drive by the recess 6, when the drive wheel will stop. If there is no movement of the article over the rollers 2, then drive is not restored until the article is urged along the conveyor.

In the alternative, and now preferred form of the invention illustrated in Figure 4, the friction drive between the driving wheel 4 and drive wheel 5 is replaced by a driving bevel gear 4a on the drive shaft 3 and in mesh with an annular gear 5a on driven wheel 5b. The annular gear 5a is interrupted at 6a to provide the interrupted drive.

By using a gear drive between the driving and driven wheels 4a and 5b, slippage between these wheels is prevented so that any slippage occurring before the interruption of the drive must be between the drive wheel 5b and the roller. This means that interruption is achieved with minimum delay and therefore minimum wear and noise.

If required, a restart of the drive may be achieved by means of a stroking device engaging directly on the gear 5a and manually operated to provide an impulse to engage normal drive by moving the gap 6a clear of the bevel gear 4a.

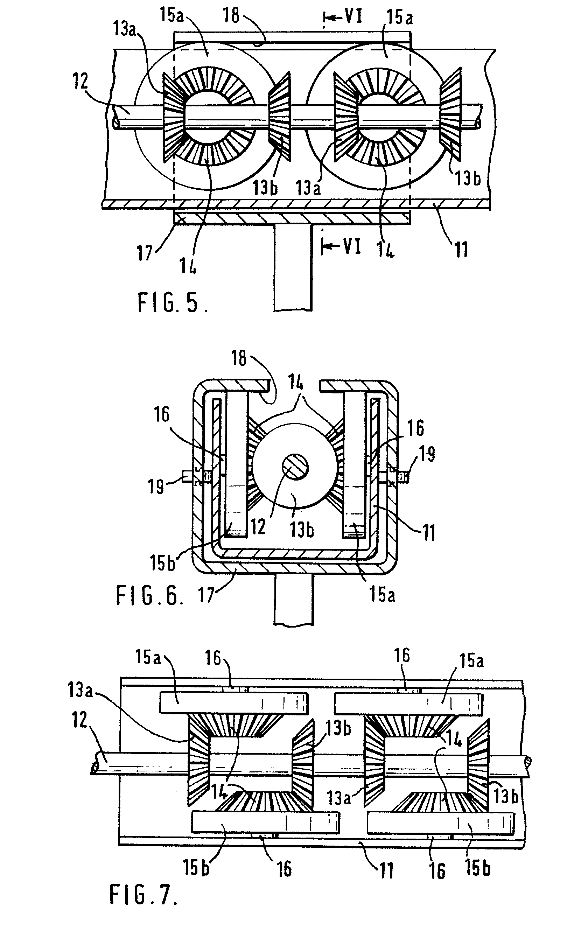

As shown in the arrangement of figures 5 to 7, drawings, a generally U-shaped conveyor track 11 of indefinite length has a longitudinal drive shaft 12 supported therein by bearings (not shown). At regular spaced intervals along the drive shaft are driving bevel gears 13a and 13b solid with the shaft 12. Each bevel gear 13a or 13b engaged a matching interrupted bevel gear 14 mounted on the face of a drive wheel 15a or 15b respectively, rotatably mounted on a transverse shaft 16. The drive wheels 15a are mounted on one side of the track and the drive wheels 15b on the other side. Carriers 17, which do the actual conveying are suspended from drive wheels 15a and 15b and have flat surfaces 18 in rolling contact with the upper surface of the drive wheels 15a and 15b so as to be driven along the track by them. Each carrier 17 is shown as having a pair of guide rollers 19 mounted for rotation about vertical axes and in engagement with the outer surfaces of the stationary track 11.

As can be seen, the interrupted bevel gears 14 provide continuous interruption and re-connection with the transmission of drive from the shaft 2 to the drive wheels 15a and 15b via the gears 13a and 13b so that if a carrier is impeded by an accumulation of goods, the drive wheels 15a and 15b only have to slip against the carriers until the arrival of the interruption at coincidence with the bevel gear 13a and 13b. The drive is then interrupted and slippage ceases. When the carrier is once more free to move, it can be nudged forward to reconnect drive. Such nudging may either be manual or from a succeeding carrier.

Alternatively, an impulse can be given to the wheel 14 by some other external device.

Various modifications may be made within the scope of the invention. For instance where accumulation is not expected at certain sections of a conveyor, then the drive transmission at these points may be without the interruption feature. Also, some parts of a conveyor system not requiring the accumulation feature may incorporate a drive by rack and pinion, e.g. between a pinion formed on the rim of the wheels 15a and 15b and a rack provided on the carrier. This will provide a more positive, non-accumulative, drive for inclined sections, either ascending or descending. Also, when a conveyor, or length of conveyor, has to include a bend, use may be made of a flexible shaft, e.g. of nylon, as the drive shaft.

CLAIMS:

1.    An accumulation conveyor comprising a series of conveying elements driven by a drive-shaft extending longitudinally of the conveyor a transmission comprising a plurality of driving wheels rotatable with the drive shaft, driven wheels rotatable about transverse axes and drivingly connected to the conveying elements and a drive connection between each driving wheel and the driven wheel, characterised in that the drive connection between the driving wheel and the driven wheel is interrupted at regular intervals and restored by rotation of the driven wheel.

2.    A conveyor according to claim 1, characterised in that the driven wheel has an interrupted annular drive-receiving zone normally in driving contact with a drive-transmitting zone of the driving wheel.

3.    A conveyor according to claim 2, characterised in that the drive between the driven and driving wheels is frictional.

4.    A conveyor according to claim 2, characterised in that drive-receiving zone is an annular gear with one or more gaps with no effective gear teeth, the drive transmitting zone of the driving wheel being a gear normally in mesh with the annular gear.

5.      A conveyor according to any of claims 2 to 4,
characterised in that it includes a manually operated
device to impart a rotary impulse to the driven wheel.


6.      A conveyor according to any of claims 1 to 5,
characterised in that the conveying elements are transverse
rollers in frictional driving engagement with the driven
wheels.


7.      A conveyor according to any of claims 1 to 5,
characterised in that the conveying elements are comprised
by a series of carriers in rolling contact on and
suspended from selected ones of the driven wheels.

1:2

0083468

FIG.1.

FIG.2.

FIG.3.

FIG.4.

0083468

FIG. 5.

FIG. 6.

FIG. 7.

0083468

European Patent
Office

**EUROPEAN SEARCH REPORT**

Application number

EP 82 30 0029.4

| Category | Citation of document with indication, where appropriate, of relevant passages | Relevant to claim |
|---|---|---|
| A | GB - A - 2 004 242 (HAMMOND)<br>* page 3, lines 89 to 126 *<br>-- | 1,6 |
| A | GB - A - 1 276 055 (LEACH)<br>* page 1, line 93 to page 2, line 68; fig. 1 *<br>-- | 1 |
| A | US - A - 3 260 128 (GASSINO et al.)<br>* fig. 2 *<br>-- | 4 |
| A | CH - A - 494 178 (W. STÖCKLIN AG)<br>-- | |
| A | DE - A1 - 2 529 121 (NAUTSCHNO-ISSLEDO-WATELSKIJ I PROJEKTNO-TECHNOLOGITSCHESKIJ INSTITUT MASCHINOSTROJENIJA)<br>---- | |

**DOCUMENTS CONSIDERED TO BE RELEVANT**

**CLASSIFICATION OF THE APPLICATION (Int. Cl. 3)**

B 65 G 47/26

B 65 G 35/06

F 16 H 13/00

F 16 H 27/08

**TECHNICAL FIELDS SEARCHED (Int.Cl. 3)**

B 65 G 13/00

B 65 G 35/00

B 65 G 47/00

F 16 H 13/00

F 16 H 27/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 19-08-1982 | SIMON |

EPO Form 1503.1 06.78